# EUROPEAN PATENT APPLICATION

(11) **EP 4 826 420 A1**
(43) Date of publication of application: **21.10.2026**
(21) Application number: 24950168.5
(22) Date of filing: 08.08.2024
(51) Int. Cl.: G02B 6/00, G02B 27/01

(54) **LENS MODULE AND AR GLASSES**

(71) Applicant: Shenzhen Yiwen Tech Limited, Shenzhen, Guangdong 518055 (CN)
(72) Inventor: CHANG, Zheng, Shenzhen, Guangdong 518055 (CN); OUYANG, Jian, Shenzhen, Guangdong 518055 (CN)
(74) Representative: Bardehle Pagenberg Partnerschaft mbB Patentanwälte Rechtsanwälte
(86) International application number: PCT/CN2024/110855
(87) International publication number: WO 2026/031119

(57) **Abstract**

The present application relates to the field of near-eye display devices. Disclosed are various lens modules and AR glasses. A lens module includes: an optical waveguide assembly, including at least an optical waveguide lens and a first anti-reflection component, a first target area and a second target area being formed on a surface of a side of the optical waveguide lens, a first grating structure being provided in the first target area, and the first anti-reflection component being arranged corresponding to the second target area, where a first abutting surface is formed on a side of the first anti-reflection component that is opposite the first grating structure, and a first target included angle greater than 16 degrees is formed between the first abutting surface and the optical waveguide lens. By limiting the angle of inclination of the side of the first anti-reflection component that is opposite the first grating structure, while ensuring that the grating structures function normally and the light transmittance is not affected, the diffraction produced by light passing through the lens module is reduced, thereby improving the clarity and user experience when a user views the real world with the AR glasses.

## Description

### Technical Field

The present application relates to the field of near-eye display devices, and in particular to a lens module and AR glasses.

### Background Art

With the advancement of optical display technology, new-generation near-eye display devices such as augmented reality (AR) devices, for example, AR glasses, are gradually emerging. At present, the optical waveguide solution has gradually become the mainstream AR solution. That is, lens modules in AR glasses can display the generated virtual projection information by means of optical waveguides while also allowing light from the real world to pass through, just like ordinary eyeglass lenses. This enables real-world images and virtual projection information to be superimposed in the user's field of view, thereby achieving augmented reality display.

In a design solution for a lens module in AR glasses known to the inventors, an optical waveguide lens includes a grating region where a grating is provided and a non-grating region where no grating is provided. Here, an anti-reflection film is applied in the non-grating region to increase the light transmittance of the optical waveguide lens in the non-grating region.

However, this design solution creates a transition zone between the grating region (uncoated) and the non-grating region (coated). The transition zone causes the diffraction of external light as it passes through the lens module, resulting in visual blurring for a user wearing the AR glasses when viewing the outside world, especially when viewing text or horizontal stripes.

Additionally, the anti-reflection film includes multiple layers of anti-reflection film units, in which high-refractive-index film layers and low-refractive-index film layers are arranged alternately along a thickness direction of the optical waveguide lens. Due to the process used for coating of the anti-reflection film units, thickness unevenness often occurs at the edges of the anti-reflection film units, particularly within the anti-reflection film units. This causes the high-refractive-index film layers to produce wedge interference to the transmitted light. Both of these issues result in visual blurring for the user wearing the AR glasses when viewing the outside world and bring poor user experience.

### Summary

Embodiments of the present application provide a lens module and AR glasses, intended to reduce the diffraction produced by external light passing through the lens module and improve the clarity and user experience when a user views the real world with the AR glasses, while ensuring that grating structures function normally and the overall light transmittance of the lens module is not affected.

In a first aspect, an embodiment of the present application provides a first type of lens module for AR glasses, the lens module including at least:
an optical waveguide assembly, including at least an optical waveguide lens and a first anti-reflection component, a first target area and a second target area being formed on a surface of a side of the optical waveguide lens, a first grating structure being provided in the first target area of the optical waveguide lens, and the first anti-reflection component being arranged corresponding to the second target area,
where a first abutting surface is formed on a side of the first anti-reflection component that is opposite the first grating structure, and a first target included angle greater than 16 degrees is formed between the first abutting surface and the optical waveguide lens.

In a second aspect, an embodiment of the present application provides a second type of lens module for AR glasses, the lens module including at least:
an optical waveguide assembly, including at least an optical waveguide lens and a first anti-reflection component, a first target area and a second target area being formed on a surface of a side of the optical waveguide lens, a first grating structure being provided in the first target area of the optical waveguide lens, and the first anti-reflection component being arranged corresponding to the second target area,
where the first anti-reflection component includes a plurality of anti-reflection film units stacked in a thickness direction of the optical waveguide lens, where a sub-abutting surface is formed on a side of each of the plurality of anti-reflection film units that is close to the first grating structure, the sub-abutting surfaces form a second abutting surface, and a second target included angle greater than 16 degrees is formed between the second abutting surface and the optical waveguide lens.

In a third aspect, an embodiment of the present application provides a third type of lens module for AR glasses, the lens module including at least:
an optical waveguide assembly, including at least an optical waveguide lens and a first anti-reflection component, a first target area and a second target area being formed on a surface of a side of the optical waveguide lens, a first grating structure being provided in the first target area of the optical waveguide lens, and the first anti-reflection component being arranged corresponding to the second target area,
where the first anti-reflection component includes a plurality of anti-reflection film units stacked in a thickness direction of the optical waveguide lens, the plurality of anti-reflection film units including at least one first-type film and at least one second-type film, where the at least one first-type film and the at least one second-type film are alternately arranged in the thickness direction of the optical waveguide lens, the first-type film has a refractive index less than 2.5, the second-type film has a refractive index less than 1.45, and the refractive index of the first-type film is greater than the refractive index of the second-type film; and
where the first-type film has a thickness equal to λ/4*n1, and the second-type film has a thickness equal to λ/4*n2, where λ is a specific wavelength corresponding to the anti-reflection film unit, n1 is the refractive index of the first-type film, and n2 is the refractive index of the second-type film.

In a fourth aspect, an embodiment of the present application further provides AR glasses, including:
a lens module according to any of the embodiments of the present application, the lens module having a near-eye side and a far-eye side opposite each other;
a frame module, including a frame assembly and a temple assembly, where the lens module is mounted on the frame assembly, and the temple assembly is connected to the frame assembly and extends toward the near-eye side of the lens module; and
an optical engine module connected to at least one of the frame assembly or the temple assembly and arranged corresponding to the lens module.

In summary, the embodiments of the present application provide various lens modules and AR glasses. A lens module includes: an optical waveguide assembly, including at least an optical waveguide lens and a first anti-reflection component, a first target area and a second target area being formed on a surface of a side of the optical waveguide lens, a first grating structure being provided in the first target area of the optical waveguide lens, and the first anti-reflection component being arranged corresponding to the second target area, where a first abutting surface is formed on a side of the first anti-reflection component that is opposite the first grating structure, and a first target included angle greater than 16 degrees is formed between the first abutting surface and the optical waveguide lens. According to the lens module and the AR glasses provided in the embodiments of the present application, by limiting the angle of inclination of the side of the first anti-reflection component that is opposite the first grating structure, while ensuring that the grating structures function normally and the overall light transmittance of the lens module is not affected, the diffraction produced by external light passing through the lens module is reduced, thereby improving the clarity and user experience when a user views the real world with the AR glasses.

### Brief Description of the Drawings

To describe the technical solutions in the embodiments of the present application more clearly, the accompanying drawings required for describing the embodiments are briefly introduced below. Apparently, the accompanying drawings in the following description show merely some embodiments of the present application, and those skilled in the art may derive other drawings from these accompanying drawings without involving any inventive effort.
Fig. 1 is a schematic structural diagram of a first implementation of a lens module according to an embodiment of the present application;
Fig. 2 is a schematic structural diagram of a second implementation of a lens module according to an embodiment of the present application;
Fig. 3 is a schematic structural diagram of a third implementation of a lens module according to an embodiment of the present application;
Fig. 4 is a schematic diagram showing an optical effect of a lens module for AR glasses;
Fig. 5 is a schematic diagram showing an optical effect of another lens module for AR glasses;
Fig. 6 is a schematic structural diagram of a fourth implementation of a lens module according to an embodiment of the present application;
Fig. 7 is a schematic structural diagram of a fifth implementation of a lens module according to an embodiment of the present application;
Fig. 8 is a schematic diagram showing an optical effect of yet another lens module for AR glasses;
Fig. 9 is a schematic structural diagram of a sixth implementation of a lens module according to an embodiment of the present application;
Fig. 10 is a schematic structural diagram of a seventh implementation of a lens module according to an embodiment of the present application;
Fig. 11 is a schematic structural diagram of an eighth implementation of a lens module according to an embodiment of the present application;
Fig. 12 is a schematic structural diagram of a ninth implementation of a lens module according to an embodiment of the present application;
Fig. 13 is a schematic structural diagram of a tenth implementation of a lens module according to an embodiment of the present application; and
Fig. 14 is a schematic structural diagram of AR glasses according to an embodiment of the present application.

### List of reference signs:

1. AR glasses; 10. lens module; 11. optical waveguide assembly; 111. optical waveguide lens; 1111. first target area; 1112. second target area; 1113. third target area; 1114. fourth target area; 1115. first grating structure; 1116. second grating structure; 1117. optical waveguide substrate; 1118. imprint adhesive layer; 112. first anti-reflection component; 1121. first abutting surface; 1122. second abutting surface; 1123. anti-reflection film unit; 1124. sub-abutting surface; 1125. first-type film; 1126. second-type film; 113. second anti-reflection component; 115. first surface; 116. second surface; 12. first protective assembly; 121. first cover plate; 122. third anti-reflection component; 123. composite layer; 13. second protective assembly; 131. second cover plate; 132. fourth anti-reflection component; 14. near-eye lens assembly; 141. optical lens; 142. rear coating film; 15. front coating film; 16. adhesive; 20. frame module; 21. frame assembly; 22. temple assembly; 30. optical engine module; 40. near-eye lens module; θ1. first target included angle; θ2. second target included angle.

### Detailed Description of Embodiments

The technical solutions in the embodiments of the present application will be described below with reference to the accompanying drawings in the embodiments of the present application. It is clear that the embodiments described are some, rather than all, of the embodiments of the present application. Based on the embodiments of the present application, other embodiments obtained by those of ordinary skill in the art without involving any inventive effort shall fall within the scope of protection of the present application. The flowcharts shown in the accompanying drawings are merely examples for description, but do not necessarily include all content or operations/steps, and the operations/steps are not necessarily performed in the order described. For example, some operations/steps may alternatively be split, combined, or partially combined, and therefore an actual order of execution may change depending on an actual situation. The foregoing descriptions are merely specific embodiments of the present application, and are not intended to limit the scope of protection of the present application. Any equivalent modifications or substitutions readily figured out by a person skilled in the art within the technical scope disclosed in the present application shall fall within the scope of protection of the present application. Therefore, the scope of protection of the present application shall be in accordance with the scope of protection of the claims.

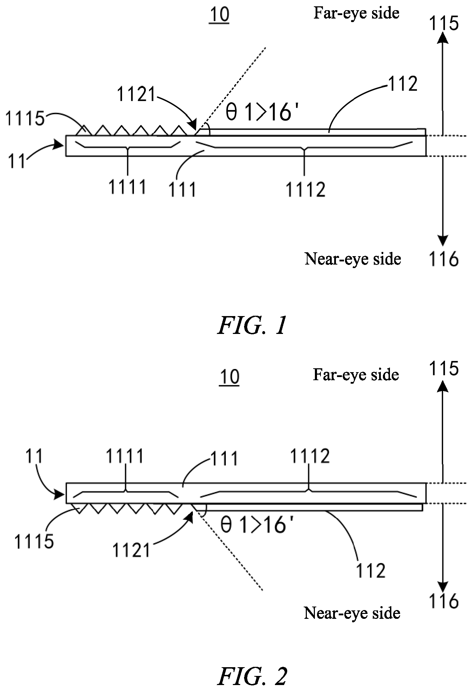

Referring to Figs. 1 and 2, Fig. 1 is a schematic structural diagram of a first implementation of a lens module according to an embodiment of the present application, and Fig. 2 is a schematic structural diagram of a second implementation of a lens module according to an embodiment of the present application.

As shown in Figs. 1 and 2, an embodiment of the present application provides a lens module 10 for AR glasses. It should be noted herein that the lens module 10 has a near-eye side and a far-eye side opposite each other in its thickness direction. The near-eye side refers to a side of the lens module 10 that is close to the user's eye when the lens module 10 is mounted on the AR glasses and the user wears the AR glasses, while the far-eye side refers to a side of the lens module 10 that faces away from the user's eye.

Specifically, the lens module 10 includes at least an optical waveguide assembly 11. The optical waveguide assembly 11 includes at least an optical waveguide lens 111 and a first anti-reflection component 112. The optical waveguide lens 111 has a first surface 115 corresponding to the far-eye side and a second surface 116 corresponding to the near-eye side, and a first target area 1111 and a second target area 1112 are formed on a surface of a side of the optical waveguide lens 111. A first grating structure 1115 is provided in the first target area 1111 of the optical waveguide lens 111, and the first anti-reflection component 112 is arranged corresponding to the second target area 1112.

The functions of the first grating structure 1115 are described as follows: In some examples, the first grating structure 1115 includes a coupling-in grating and a coupling-out grating. That is, the coupling-in grating and the coupling-out grating are arranged on the same side of the optical waveguide lens 111, and the optical waveguide assembly 11 is configured to transmit light input from the coupling-in grating to the coupling-out grating for output. In the AR glasses, an optical engine module 30 of the AR glasses is arranged corresponding to the coupling-in grating and configured to output an optical signal to the coupling-in grating, and the optical waveguide lens 111 transmits the optical signal input from the coupling-in grating to the coupling-out grating for output, such that the optical signal output by the optical engine module 30 enters the user's field of view.

Here, the coupling-in grating and/or the coupling-out grating may be a first surface 115 formed on the far-eye side of the optical waveguide lens 111 as shown in Fig. 1, or a second surface 116 formed on the near-eye side of the optical waveguide lens 111 as shown in Fig. 2. It should be understood that in response to the coupling-in grating being arranged on the first surface 115, the coupling-in grating is a reflective grating, and in response to the coupling-in grating being arranged on the second surface 116, the coupling-in grating is a transmissive grating. The same applies to the coupling-out grating.

It should also be noted that the first anti-reflection component 112 is configured to increase the light transmittance of the second target area 1112, thereby reducing the light loss caused when light from outside the AR glasses enters the optical waveguide lens 111 through a surface of the second target area 1112.

As an example, the first anti-reflection component 112 is an anti-reflection film (also referred to as an anti-reflection coating), which may be applied to the second target area 1112 of the optical waveguide lens 111 through a coating process. For example, during the coating process on the surface of the optical waveguide lens 111, in order to apply an anti-reflection film in the second target area 1112 on the surface of the optical waveguide lens 111 while applying no anti-reflection film in the first target area 1111 where the first grating structure 1115 is formed, the surface of the optical waveguide lens 111 can be coated by means of selective coating (i.e., a fixture is used to shield the first target area 1111 during a coating operation, to prevent the anti-reflection film from being applied to the first target area 1111).

As an example, the anti-reflection film has the effect of ensuring that, within the range of visible light, the reflectivity of incident light entering the anti-reflection film at an angle of incidence from 0 to 30 degrees is less than 5%.

It should be understood that, taking the first anti-reflection component 112 being an anti-reflection film as an example, since the first grating structure 1115 is specifically a relief structure formed on the optical waveguide lens 111, if the anti-reflection film covers a surface of the first grating structure 1115, the thickness of the anti-reflection film is uneven, and the anti-reflection film will affect optical properties of the first grating structure 1115. Therefore, in the lens module 10 of the present application, the coverage area of the first anti-reflection component 112 is limited to within the second target area 1112, without covering the first target area 1111.

By providing the first anti-reflection component 112 for partial coverage on the side of the optical waveguide assembly 11 where the first grating structure 1115 is formed, the overall light transmittance of the lens module 10 is improved, and particularly, the light loss caused when light from outside the AR glasses enters the optical waveguide lens 111 through the surface of the second target area 1112 is reduced. Moreover, the coverage area of the first anti-reflection component 112 being limited to within the second target area 1112 without covering the first target area 1111 can improve the overall light transmittance of the lens module 10 while ensuring the normal functions of the first grating structure 1115.

As shown in Figs.1 and 2, in some implementations, a first abutting surface 1121 is formed on a side of the first anti-reflection component 112 that is opposite the first grating structure 1115, and a first target included angle θ1 is formed between the first abutting surface 1121 and the optical waveguide lens 111. The first target included angle θ1 is greater than 16 degrees.

It should be understood that the first abutting surface 1121 refers to a surface on the side of the first anti-reflection component 112 that is opposite the first grating structure 1115, and the first target included angle θ1 refers to an included angle between the first abutting surface 1121 and the inner side of the optical waveguide lens 111.

Here, the first target included angle θ1 is greater than 16 degrees, and in some implementations, the first target included angle θ1 should be as large as possible.

It should be noted that since all coating processes, including the selective coating or other solutions, result in the formation of a transition zone between the first target area 1111 (where no first anti-reflection component 112 is applied) and the second target area 1112 (where the first anti-reflection component 112 is applied), and this transition zone is sloped, light diffraction occurs near the transition zone when external light passes through the lens module 10, resulting in visual blurring for the user wearing the AR glasses 1 when viewing the outside world, especially when viewing text or horizontal stripes.

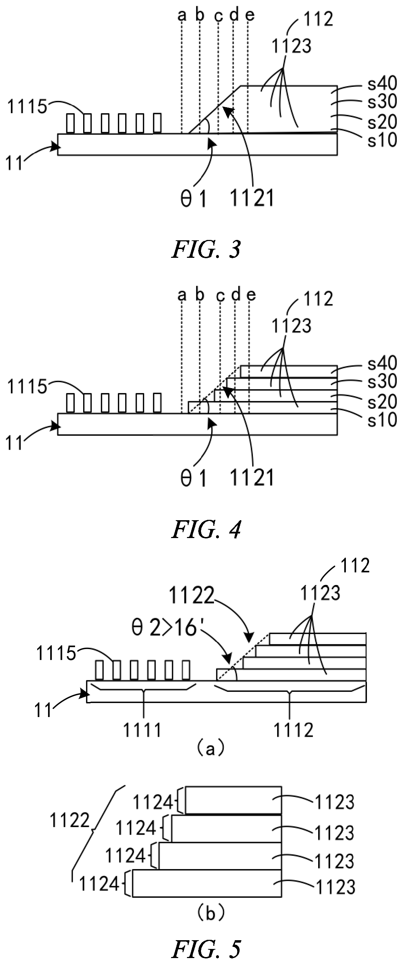

Referring to Figs. 3 and 4, Fig. 3 is a schematic diagram showing an optical effect of a lens module for AR glasses, and Fig. 4 is a schematic diagram showing an optical effect of another lens module for AR glasses.

As shown in Fig. 3, a first abutting surface 1121 is formed on a side of the first anti-reflection component 112 that is opposite the first grating structure 1115. That is, a transition zone corresponding to the first abutting surface 1121 is formed between the first target area 1111 and the second target area 1112.

Light rays a, b, c, d and e that enter perpendicularly relative to the lens module 10 are described as follows: Since the refractive index of the first anti-reflection component 112 is greater than that of air and the first abutting surface 1121 is sloped, optical path lengths taken by the light rays a, b, c, d, and e from outside the AR glasses 1 into the user's eye through the lens module 10 are not identical. This causes the diffraction of external light rays as they pass through the lens module 10, resulting in visual blurring for the user wearing the AR glasses 1 when viewing the outside world, and especially when viewing texts or horizontal stripes.

The following description is made by taking the first anti-reflection component 112 being an anti-reflection film as an example: The existing anti-reflection film includes a plurality of anti-reflection film units 1123 stacked in a thickness direction of the optical waveguide lens 111, and transmittances of the respective anti-reflection film units 1123 are different; and generally, in the anti-reflection film, the anti-reflection film units 1123 with a high refractive index and the anti-reflection film units 1123 with a low refractive index are alternately stacked.

To describe further, each of the anti-reflection film units 1123 has a specific wavelength corresponding thereto, and each of the anti-reflection film units 1123 is configured to increase the transmittance to light at that specific wavelength. Specifically, the thickness of each of the anti-reflection film units 1123 is typically one-quarter of the specific wavelength. When light at the specific wavelength passes through the anti-reflection film unit 1123, part of the light is reflected on the surface of the anti-reflection film unit 1123 to produce a first reflected light, while part of the light enters the anti-reflection film unit 1123 and is reflected on the opposite side of the anti-reflection film unit 1123 to produce a second reflected light. The wavelengths of the first and second reflected light are also the specific wavelength. When the first reflected light and the second reflected light recombine, since the thickness of the anti-reflection film unit 1123 is one-quarter of the specific wavelength, the path difference between the first and second reflected light is exactly half of that specific wavelength. This causes the first and second reflected light to be opposite in phase, resulting in destructive interference, thereby significantly reducing the intensity of both the first and second reflected light. The reduction in the intensity of the first and second reflected light means that more light transmits through the optical waveguide assembly 11, thereby improving the overall light transmittance of the optical waveguide assembly 11.

Taking Fig. 4 as an example, the first anti-reflection component 112 includes anti-reflection film units s10, s20, s30, and s40 stacked in the thickness direction of the optical waveguide lens 111, with a thickness of d10, d20, d30, and d40, respectively, and a refractive index of n10, n20, n30, and n40, respectively. Let n00 denote the refractive index of air, then, the optical path lengths that light rays a, b, c, d, and e need to travel from one side of the first anti-reflection component 112 to the other side thereof are as follows:
optical path length corresponding to light ray a: la = n00 * (d10 + d20 + d30 + d40);
optical path length corresponding to light ray b: lb = n10 * d10 + n00 * (d20 + d30 + d40);
optical path length corresponding to light ray c: lc = n10 * d10 + n20 * d20 + n00 * (d30 + d40);
optical path length corresponding to light ray d: ld = n10 * d10 + n20 * d20 + n30 * d30 + n00 * d40; and
optical path length corresponding to light ray e: le = n10 * d10 + n20 * d20 + n30 * d30 + n40 * d40.

Since the transmittance of each anti-reflection film unit 1123 differs, there is a difference in the optical path lengths corresponding to the aforementioned light rays, for example, the optical path length difference between adjacent light rays a and b is (n10 - n00) * d10. When the optical path length difference between adjacent light rays is an integer multiple of half the wavelength of the light rays, constructive or destructive interference occurs between the adjacent light rays, forming interference fringes. This distorts the originally clear external image and creates a visually blurred transition zone, resulting in visual blurring for the user wearing the AR glasses 1 when viewing the outside world.

Based on this, in some implementations, the first target included angle θ1 should be as large as possible, and the first target included angle θ1 should be at least greater than 16 degrees. It should be noted that the larger the first target included angle θ1, the smaller the first abutting surface 1121 and the transition zone formed by the first anti-reflection component 112, and consequently, the less distortion will occur in the external image, and the lower the degree of visual blurring will be.

As a supplementary note, the definition of the first target included angle θ1 may be determined based on the angle of inclination formed by at least two anti-reflection film units 1123 of the first anti-reflection component 112. Specifically, the angle of inclination formed by any two adjacent anti-reflection film units 1123 is taken as the first target included angle θ1.

The derivation process of the first target included angle θ1 being greater than 16 degrees in this embodiment of the present application is specifically described below with reference to Fig. 4.

As shown in Fig. 4, the anti-reflection film includes a plurality of anti-reflection film units 1123 stacked in the thickness direction of the optical waveguide lens 111, where the anti-reflection film unit s10 having a thickness of d10 and a refractive index of n10 is taken as an example for description. For two light rays f and g entering at an oblique angle, with the first target included angle θ1 as the variable, the maximum optical path length difference between the light rays f and g as they pass from one side of the anti-reflection film unit s10 to the other side thereof is (L/sinθ1) * (n10 - n00).

As explained in the principle of the anti-reflection film unit 1123 above, the thickness of the anti-reflection film unit s10 is one-quarter of the specific wavelength. Consider the three primary colours of light, namely red, green, and blue light, with corresponding wavelengths of 700 nm, 550 nm, and 460 nm, respectively, blue light has the shortest wavelength among them. To ensure that the maximum optical path length difference of the red, green and blue light traveling from one side of the anti-reflection film unit s10 to reach the other side thereof will not result in destructive interference, the thickness of the anti-reflection film unit s10 and the maximum optical path length difference between the light rays f and g traveling from one side of the anti-reflection film unit s10 to the other side thereof are calculated based on the wavelength corresponding to blue light, and it can be determined that the first target included angle θ1 is required to be greater than 16 degrees. On the condition that the first target included angle θ1 is greater than 16 degrees, it is possible to reduce the diffraction produced by external light passing through the lens module 10, without affecting the anti-reflection property of the anti-reflection film unit 1123, thereby improving the clarity and user experience when the user views the real world with the AR glasses 1.

Referring to Fig. 5, Fig. 5 is a schematic structural diagram of a fourth implementation of a lens module 10 according to an embodiment of the present application.

As shown in Fig. 5, in some implantations, the first anti-reflection component 112 includes a plurality of anti-reflection film units 1123 stacked in a thickness direction of the optical waveguide lens 111. A sub-abutting surface 1124 is formed on a side of each of the plurality of anti-reflection film units 1123 that is close to the first grating structure 1115, the sub-abutting surfaces 1124 form a second abutting surface 1122, and a second target included angle θ2 is formed between the second abutting surface 1122 and the optical waveguide lens 111. The second target included angle θ2 is greater than 16 degrees.

Here, the sub-abutting surface 1124 is a surface on the side of a single anti-reflection film unit 1123 that is close to the first grating structure 1115. The second abutting surface 1122 is a side surface formed by joining the plurality of sub-abutting surfaces 1124. The second target included angle θ2 can be determined based on the angle of inclination formed by at least two anti-reflection film units 1123 of the first anti-reflection component 112. Specifically, the angle of inclination formed by any two adjacent anti-reflection film units 1123 is taken as the second target included angle θ2.

It should be understood that the first target included angle θ1 and the second target included angle θ2 may refer to the same included angle. Particularly, on the premise that the first anti-reflection component 112 includes a plurality of anti-reflection film units 1123 stacked on the side corresponding to the first grating structure 1115, both the first target included angle θ1 and the second target included angle θ2 refer to an included angle formed between the side surface formed by joining the plurality of sub-abutting surfaces 1124 and the optical waveguide lens 111.

Therefore, in this embodiment of the present application, for the derivation process and the beneficial effect of the second target included angle θ2 being greater than 16 degrees, reference may be made to the description of the first target included angle θ1, which will not be repeated herein.

The process for imposing limitations on the first target included angle θ1 and/or the second target included angle θ2 in the embodiment of the present application is described from the perspective of production as follows: In addition to adopting a better edge coating process or modifying a coating fixture, it is also possible to use processes such as lithography and cutting to trim the side of the first anti-reflection component 112 that is opposite the first grating structure 1115 after the first anti-reflection component 112 is applied, so as to limit the first target included angle θ1 and/or the second target included angle θ2 to be greater than 16 degrees.

It should be noted that a first protective assembly 12 is arranged on the side of the optical waveguide lens 111 where the first grating structure 1115 is formed, and in some implementations, the first protective assembly 12 covers the first grating structure 1115 and the first anti-reflection component 112, to protect the first grating structure 1115 formed on the optical waveguide lens 111. It should be understood that the grating structure is a fine structure, and wear on the grating structure will compromise the optical properties of the grating. Therefore, the provision of the first protective assembly 12 can improve the durability of the lens module 10.

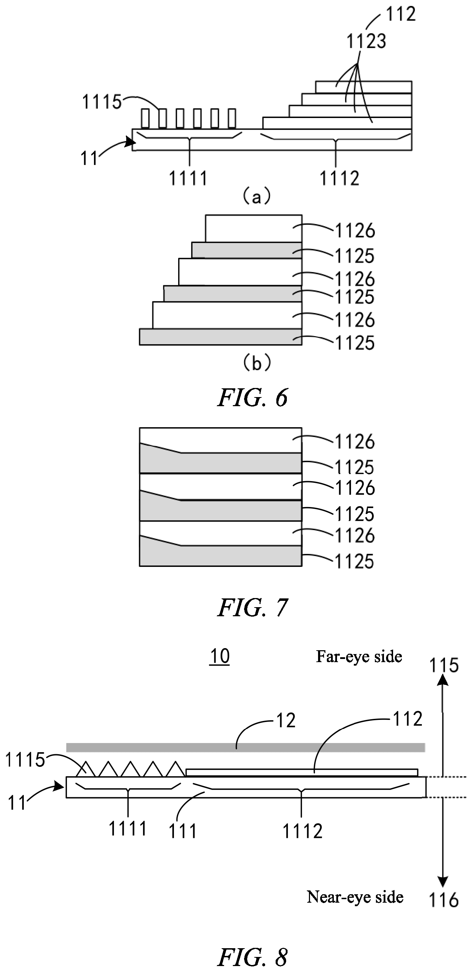

Referring to Figs. 6 and 7, Fig. 6 is a schematic structural diagram of a fifth implementation of a lens module 10 according to an embodiment of the present application, and Fig. 7 is a schematic diagram showing an anti-reflection film generating wedge interference.

As shown in Fig. 7, the first anti-reflection component 112 includes a plurality of anti-reflection film units 1123 stacked in a thickness direction of the optical waveguide lens 111. The plurality of anti-reflection film units 1123 include at least one first-type film 1125 and at least one second-type film 1126. The at least one first-type film 1125 and the at least one second-type film 1126 are alternately arranged in the thickness direction of the optical waveguide lens 111, the first-type film 1125 has a refractive index less than 2.5, the second-type film 1126 has a refractive index less than 1.45, and the refractive index of the first-type film 1125 is greater than that of the second-type film 1126.

Here, the first-type film 1125 has a thickness equal to λ/4*n1, and the second-type film 1126 has a thickness equal to λ/4*n2, where λ is a specific wavelength corresponding to the anti-reflection film unit 1123, n1 is the refractive index of the first-type film 1125, and n2 is the refractive index of the second-type film 1126.

It should be noted that the numerical relationship between the first-type film 1125 and the specific wavelength and the numerical relationship between the second-type film 1126 and the specific wavelength are described above, and the specific derivation is not repeated; while the refractive indexes of the first-type film 1125 and the second-type film 1126 are defined numerically in this implementation, it is ensured that the thickness of the second-type film 1126 is much greater than that of the first-type film 1125 (i.e., the thickness of the anti-reflection film unit 1123 with a low refractive index is much greater than that of the anti-reflection film unit 1123 with a high refractive index), thereby reducing the wedge interference caused by the uneven edge thickness of the first-type film 1125.

The following describes the causes of the wedge interference with reference to Fig. 7:
As shown in Fig. 7, taking the first anti-reflection component 112 being an anti-reflection film as an example, the anti-reflection film includes a plurality of anti-reflection film units 1123 arranged in stack, and the anti-reflection film units 1123 with a high refractive index and the anti-reflection film units 1123 with a low refractive index are alternately stacked. The current method for applying anti-reflection films involves applying multiple layers of anti-reflection film units 1123 one by one onto the first surface 115 of the optical waveguide lens 111. Due to the process involved in applying the anti-reflection film units 1123, edges of the anti-reflection film units 1123 are prone to thickness unevenness. Particularly, during the process of applying anti-reflection film units 1123 with a high refractive index, the amount of raw material used tends to exceed the required amount. The accumulation of excess raw material causes the edges of the anti-reflection film units 1123 to become thicker, leading to severe wedge interference, thereby resulting in visual blurring for the user wearing the AR glasses 1 when viewing the outside world and bring poor user experience.

On this basis, the embodiment of the present application numerically defines the refractive indexes of the first-type film 1125 and the second-type film 1126 so as to ensure that the thickness of the second-type film 1126 is much greater than that of the first-type film 1125, i.e., the thickness of the anti-reflection film unit 1123 with a low refractive index is increased. Thus, during the process of applying the first anti-reflection component 112, the second-type film 1126 with a significant increase in thickness will squeeze the first-type film 1125, reducing the uneven thickness of the first-type film 1125, thereby reducing interference caused by the wedge interference when the user views the outside world.

How to reduce the wedge interference will be described below from the perspective of production: In addition to increasing the thickness of the anti-reflection film units 1123 with a low refractive index, a better edge coating process can be used, or a coating fixture can be modified, and it is also possible to use processes such as lithography and cutting to trim the edge of the side of the first anti-reflection component 112 that is opposite the first grating structure 1115 after the first anti-reflection component 112 is applied, so as to ensure the flat edge of the first anti-reflection component 112.

Referring to Fig. 8, Fig. 8 is a schematic structural diagram of a sixth implementation of a lens module according to an embodiment of the present application.

As shown in Fig. 8, in some implementations, the lens module 10 further includes a first protective assembly 12. The first protective assembly 12 is arranged on the side of the optical waveguide lens 111 where the first grating structure 1115 is formed, and the first anti-reflection component 112 is arranged between the first protective assembly 12 and the optical waveguide lens 111.

The first protective assembly 12 is a light-transmissive protective assembly to ensure that light from outside the AR glasses can pass through the first protective assembly 12, and the first protective assembly 12 covers at least the first grating structure 1115 to protect the first grating structure 1115. In some implementations, the first protective assembly 12 covers the first grating structure 1115 and the first anti-reflection component 112, so as to improve the protection effect of the first protective assembly 12 on the entire optical waveguide lens 111 and the first grating structure 1115.

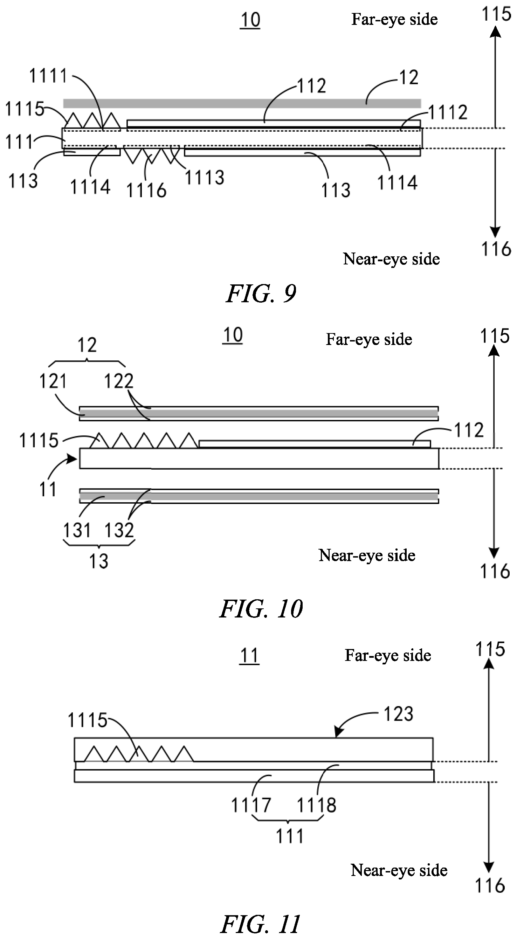

Referring to Fig. 9, Fig. 9 is a schematic structural diagram of a sixth implementation of a lens module according to an embodiment of the present application.

As shown in Fig. 9, in some implementations, a third target area 1113 and a fourth target area 1114 are formed on a surface of a side of the optical waveguide lens 111 that faces away from the first grating structure 1115, a second grating structure 1116 is provided in the third target area 1113 of the optical waveguide lens 111, and the optical waveguide assembly 11 further includes a second anti-reflection component 113. The second anti-reflection component 113 is arranged, corresponding to the fourth target area 1114, on the side of the optical waveguide lens 111 where the second grating structure 1116 is formed.

It should be noted that for the specific configuration of the second anti-reflection component 113, reference may be made to the configuration of the first anti-reflection component 112, so as to reduce the diffraction produced by external light passing through the lens module 10, which will not be described in detail herein.

In this implementation, one of the first grating structure 1115 and the second grating structure 1116 includes a coupling-in grating, and the other one includes a coupling-out grating. That is, the first grating structure 1115 and the second grating structure 1116 are formed on two opposite sides of the optical waveguide lens 111 respectively, and the coupling-in grating and the coupling-out grating are also formed on the two opposite sides of the optical waveguide lens 111 respectively.

With respect to the surface of the optical waveguide lens 111 where the second grating structure 1116 is formed, it can be divided into the third target area 1113 and the fourth target area 1114. Specifically, the second grating structure 1116 is provided in the third target area 1113, while the second anti-reflection component 113 covers the fourth target area 1114. Similar to the first anti-reflection component 112, the coverage area of the second anti-reflection component 113 is limited to within the fourth target area 1114 without covering the third target area 1113, so that the overall light transmittance of the lens module 10 can be improved while ensuring the normal functions of the second grating structure 1116.

It should be understood that in an actual design for the lens module 10, the coupling-in grating and the coupling-out grating may be arranged on the same side or on different sides of the optical waveguide lens 111, depending on the optical design target or process manufacturing conditions of the optical waveguide lens 111.

Referring to Fig. 10, Fig. 10 is a schematic structural diagram of a seventh implementation of a lens module according to an embodiment of the present application.

As shown in Fig. 10, in some implementations, the first protective assembly 12 includes at least a first cover plate 121. The first cover plate 121 is arranged on the side of the optical waveguide lens 111 where the first grating structure 1115 is formed, and is spaced apart from the optical waveguide assembly 11.

As an example, the first cover plate 121 is a light-transmissive cover plate, such as a glass cover plate, such that light entering from outside the AR glasses can pass through the first cover plate 121 while protecting the optical waveguide lens 111.

In some implementations, the first cover plate 121 covers the first grating structure 1115 and the first anti-reflection component 112, so that the protection effect of the first cover plate 121 on the entire optical waveguide lens 111 and the first grating structure 1115 is improved.

As shown in Fig. 10, in some implementations, the first protective assembly 12 further includes a third anti-reflection component 122. The third anti-reflection component 122 is arranged on at least one side of the first cover plate 121 in its thickness direction. That is, the third anti-reflection component 122 may be arranged on a near-eye side of the first cover plate 121, or may be arranged on a far-eye side of the first cover plate 121, or may be separately arranged on two sides of the first cover plate 121 in its thickness direction as shown in Fig. 10.

As an example, the third anti-reflection component 122 is an anti-reflection film, which may be applied on at least one side of the first cover plate 121 in its thickness direction by a coating process.

It should be noted that when the third anti-reflection component 122 is arranged on a side of the first cover plate 121 that faces away from the optical waveguide lens 111, the transmittance of light entering the first cover plate 121 from the far-eye side of the lens module 10 increases; when the third anti-reflection component 122 is arranged on a side of the first cover plate 121 that is close to the optical waveguide lens 111, the transmittance of light exiting from the first cover plate 121 to the optical waveguide lens 111 increases; and when the third anti-reflection component 122 is arranged on both the side of the first cover plate 121 that faces away from the optical waveguide lens 111 and the side close to the optical waveguide lens 111, the transmittance of light entering the first cover plate 121 from the far-eye side of the lens module 10 and the transmittance of light exiting from the first cover plate 121 to the optical waveguide lens 111 both increase.

In some implementations, a distance between the first protective assembly 12 and the first anti-reflection component 112 is from 0.01 mm to 10 mm.

It should be noted that when the third anti-reflection component 122 is arranged on the side of the first cover plate 121 that is close to the optical waveguide lens 111, the distance between the first protective assembly 12 and the first anti-reflection component 112 refers to a distance between the third anti-reflection component 122 and the first anti-reflection component 112.

When no third anti-reflection component 122 is provided on the side of the first cover plate 121 that is close to the optical waveguide lens 111, the distance between the first protective assembly 12 and the first anti-reflection component 112 refers to a distance between the first cover plate 121 and the first anti-reflection component 112.

Referring to Fig. 11, Fig. 11 is a schematic structural diagram of an eighth implementation of a lens module according to an embodiment of the present application.

As shown in Fig. 11, in some implementations, the first protective assembly 12 includes a composite layer 123 covering the side of the optical waveguide lens 111 where the first grating structure 1115 is formed. The composite layer 123 is adapted to a surface of the first grating structure 1115. The composite layer 123 includes at least a protective coating and an anti-reflection coating.

Specifically, the protective coating is arranged on the side of the optical waveguide lens 111 where the first grating structure 1115 is formed, and is configured to protect at least the first grating structure 1115; and the anti-reflection coating is arranged on a side of the protective coating that faces away from the optical waveguide lens 111, and is configured to perform anti-reflection treatment on the external light entering the lens module 10.

For example, the configuration of the composite layer 123 involves that a protective coating and an anti-reflection coating may be applied sequentially on the surface of the side of the optical waveguide lens 111 where the first grating structure 1115 is formed, to ensure that the composite layer 123 is properly adapted to the surface of the first grating structure 1115, thereby achieving good light transmission performance of the composite layer 123. In some implementations, the composite layer 123 has a refractive index between 1.2 and 1.8.

For example, the protective coating of the composite layer 123 includes an abrasion-resistant film layer and an anti-fouling film layer arranged on the surface of the side of the optical waveguide lens 111 where the first grating structure 1115 is formed. The protective coating, the abrasion-resistant film layer and the anti-fouling film layer may all be polymer coatings.

Compared to the approach of using the first cover plate 121, this implementation employs the composite layer 123 as the first protective assembly 12, further increasing the light transmittance of the first protective assembly 12 and mitigating the reflection effect of the first cover plate 121, which is made of glass, for example, on incident light from the outside.

As shown in Fig. 11, in some implementations, the first protective assembly 12 includes a composite layer 123 covering the side of the optical waveguide lens 111 where the first grating structure 1115 is formed, and the first anti-reflection component 112 may be removed when the composite layer 123 includes an anti-reflection coating.

It should be noted that the composite layer 123 includes at least a protective coating and an anti-reflection coating, where the protective coating is equivalent to the first protective assembly 12 shown in Figs. 8 to 10, and the anti-reflection coating is equivalent to the first anti-reflection component 112 shown in Figs. 8 to 10. Therefore, in the lens module 10 shown in Fig. 11, the side of the optical waveguide lens 111 where the first grating structure 1115 is formed is still provided with the first protective assembly 12 and the first anti-reflection component 112.

Moreover, since the composite layer 123 itself already includes an anti-reflection coating, the removal of the first anti-reflection component 112 will not reduce the transmittance to the incident light from the outside, but can reduce the size in the thickness direction of the lens module 10, thereby facilitating the lightening of the lens module 10 and the AR glasses.

As shown in Fig. 10, in some implementations, the lens module 10 further includes a second protective assembly 13.

Specifically, the second protective assembly 13 is spaced apart from the optical waveguide lens 111 on a side of the optical waveguide lens 111 that is away from the first protective assembly 12.

It should be understood that the second protective assembly 13 arranged on the side of the optical waveguide lens 111 that is away from the first protective assembly 12 can improve the protection effect on the optical waveguide lens 111. For example, in some implementations, when the second grating structure 1116 is provided on the surface of the side of the optical waveguide lens 111 that faces away from the first grating structure 1115, the optical waveguide lens 111 can also effectively protect the second grating structure 1116. In addition, the second protective assembly 13 is spaced apart from the optical waveguide lens 111, so that the second grating structure 1116 can be prevented from being damaged.

In some implementations, the second protective assembly 13 includes at least a second cover plate 131. The second cover plate 131 is arranged on the side of the optical waveguide lens 111 that is away from the first protective assembly 12, and is spaced apart from the optical waveguide assembly 11.

For example, the second cover plate 131 is a light-transmissive cover plate, such as a glass cover plate, such that light exiting from the optical waveguide lens 111 toward the near-eye side can pass through the second cover plate 131 while protecting the optical waveguide lens 111.

In some implementations, the second protective assembly 13 further includes a fourth anti-reflection component 132. The fourth anti-reflection component 132 is arranged on at least one side of the second cover plate 131 in its thickness direction.

As an example, the fourth anti-reflection component 132 is an anti-reflection film, which may be applied on at least one side of the second cover plate 131 in its thickness direction by a coating process.

It should be noted that when the fourth anti-reflection component 132 is arranged on a side of the second cover plate 131 that faces away from the optical waveguide lens 111, the transmittance of light entering the second cover plate 131 from the far-eye side of the lens module 10 increases; when the fourth anti-reflection component 132 is arranged on a side of the second cover plate 131 that is close to the optical waveguide lens 111, the transmittance of light exiting from the second cover plate 131 to the near-eye side increases; and when the fourth anti-reflection component 132 is arranged on both the side of the second cover plate 131 facing away from the optical waveguide lens 111 and the side close to the optical waveguide lens 111, the transmittance of light entering the second cover plate 131 from the far-eye side of the lens module 10 and the transmittance of light exiting from the second cover plate 131 to the near-eye side both increase.

As a supplementary note, the terms "first anti-reflection component 112", "second anti-reflection component 113", "third anti-reflection component 122" and "fourth anti-reflection component 132" as used in the embodiments of the present application may all refer to an anti-reflection film, which has the effect of ensuring that, within the range of visible light, the reflectivity of incident light entering the anti-reflection film at an angle of incidence from 0 to 30 degrees is less than 5%.

In some implementations, a distance between the second protective assembly 13 and the optical waveguide assembly 11 is from 0.01 mm to 10 mm.

It should be noted that when the side of the second cover plate 131 that is close to the optical waveguide lens 111 is provided with the fourth anti-reflection component 132 and the optical waveguide assembly 11 is not provided with the second anti-reflection component 113, the distance between the second protective assembly 13 and the optical waveguide assembly 11 refers to a distance between the fourth anti-reflection component 132 and the optical waveguide lens 111.

When the side of the second cover plate 131 that is close to the optical waveguide lens 111 is not provided with the fourth anti-reflection component 132 and the optical waveguide assembly 11 is not provided with the second anti-reflection component 113, the distance between the second protective assembly 13 and the optical waveguide assembly 11 refers to a distance between the second cover plate 131 and the optical waveguide lens 111.

When the side of the second cover plate 131 that is close to the optical waveguide lens 111 is provided with the fourth anti-reflection component 132 and the optical waveguide assembly 11 is provided with the second anti-reflection component 113, the distance between the second protective assembly 13 and the optical waveguide assembly 11 refers to a distance between the fourth anti-reflection component 132 and the second anti-reflection component 113.

When the side of the second cover plate 131 that is close to the optical waveguide lens 111 is provided with the fourth anti-reflection component 132 and the optical waveguide assembly 11 is not provided with the second anti-reflection component 113, the distance between the second protective assembly 13 and the optical waveguide assembly 11 refers to a distance between the second cover plate 131 and the second anti-reflection component 113.

In some implementations, the optical waveguide lens 111 has a first surface 115 corresponding to a far-eye side and a second surface 116 corresponding to a near-eye side, and the first grating structure 1115 includes a coupling-in grating and a coupling-out grating.

In response to the coupling-in grating being arranged on the first surface 115, the coupling-in grating is a reflective grating, and in response to the coupling-in grating being arranged on the second surface 116, the coupling-in grating is a transmissive grating; and
in response to the coupling-out grating being arranged on the first surface 115, the coupling-out grating is a reflective grating, and in response to the coupling-out grating being arranged on the second surface 116, the coupling-out grating is a transmissive grating.

As shown in Figs. 8, 9 and 10, in some implementations, no second protective assembly 13 is provided on the side of the optical waveguide lens 111 that is away from the first protective assembly 12.

It should be noted that, compared to existing lens modules or the lens module 10 shown in Fig. 10, the lens module 10 of the present application does not require a cover plate or other protective assemblies as the second protective assembly 13 on the near-eye side of the optical waveguide lens 111. This reduces light reflection caused by the provision of the second protective assembly 13, and improves the overall light transmittance of the lens module 10.

Particularly, considering that in the AR glasses, a near-eye lens assembly 14 (e.g., a refractive lens or a plano lens) is further arranged on the near-eye side of the lens module 10, and that the near-eye lens assembly 14 enables the optical waveguide lens 111, the approach of not providing a cover plate or other protective assemblies directly on the near-eye side of the optical waveguide lens 111 is feasible.

As shown in Fig. 11, in some implementations, the optical waveguide lens 111 includes an optical waveguide substrate 1117 and an imprint adhesive layer 1118. The imprint adhesive layer 1118 is arranged on at least one side of the optical waveguide substrate 1117 in its thickness direction, and the imprint adhesive layer 1118 forms the first grating structure 1115.

In some implementations, the imprint adhesive layer 1118 may be arranged on each of two opposite sides of the optical waveguide substrate 1117 in its thickness direction, and the imprint adhesive layers 1118 located on the two opposite sides of the optical waveguide substrate 1117 then form the first grating structure 1115 and the second grating structure 1116 respectively, as shown in Fig. 9.

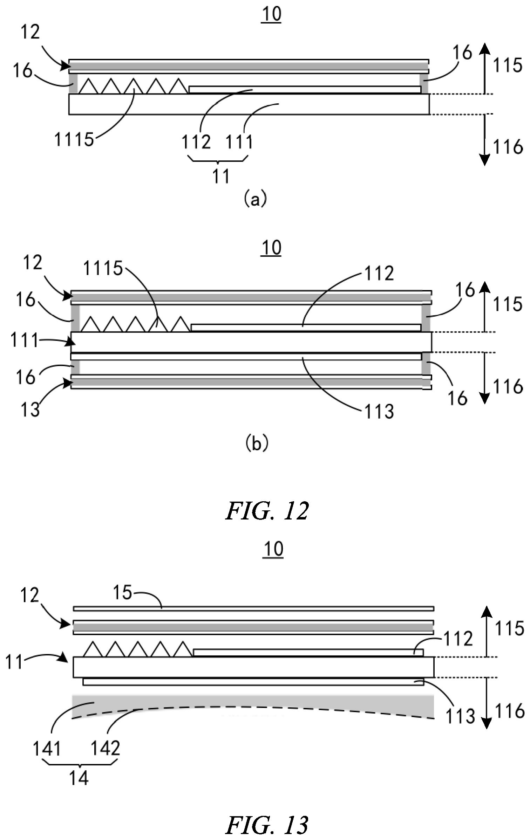

Referring to Fig. 12, Fig. 12 is a schematic structural diagram of a ninth implementation of a lens module according to an embodiment of the present application.

As shown in Figs. 12(a) and 12(b), in some implementations, an adhesive 16 is provided at the edge of the lens module 10, and the adhesive 16 is configured to secure the edge of the optical waveguide assembly 11 to the edge of the first protective assembly 12, as shown in Figs. 12(a) and 12(b), or to secure the edge of the optical waveguide assembly 11 to the edge of the second protective assembly 13, as shown in Fig. 12(b). In addition to its securing function, the adhesive 16 provided at the edge of the lens module 10 can ensure that the distance between the optical waveguide assembly 11 and the first protective assembly 12 and/or between the optical waveguide assembly 11 and the second protective assembly 13 is maintained within the range specified in the description of the present application, while also preventing external moisture, dust, etc. from entering the space between the optical waveguide assembly 11 and the first protective assembly 12 and/or between the optical waveguide assembly 11 and the second protective assembly 13.

Referring to Fig. 13, Fig. 13 is a schematic structural diagram of a tenth implementation of a lens module according to an embodiment of the present application.

As shown in Fig. 13, in some implementations, the lens module 10 has a near-eye side and a far-eye side opposite each other, and the lens module 10 further includes a near-eye lens assembly 14. The near-eye lens assembly 14 is arranged on the near-eye side of the optical waveguide lens 111. The near-eye lens assembly 14 is one of a refractive lens and a plano lens.

It should be understood that refractive lens is, for example, a myopic or hyperopic lens, and is configured to adjust light incident thereon to meet the user's needs for vision correction. Specifically, when the user wearing the AR glasses requires vision correction, an image optical signal generated by an optical engine module 30 of the AR glasses is transmitted through the optical waveguide assembly 11 to enter the refractive lens, while light from the outside toward the AR glasses also passes through the optical waveguide assembly 11 to enter the refractive lens. The refractive lens can adjust the refraction of both types of incident light, so that the refractively adjusted light reaches the user's field of view.

It should be understood that, when there is no need for vision correction, the refractive lens can be replaced with the plano lens, in which case the light from the outside and the image optical signal output by the optical engine module 30 of the AR glasses are superimposed and then pass through the plano lens into the user's field of view.

As shown in Fig. 13, in some implementations, the near-eye lens assembly 14 includes an optical lens 141 and a rear coating film 142. The optical lens 141 is arranged on the near-eye side of the optical waveguide lens 111 and spaced apart from the optical waveguide assembly 11, and the rear coating film 142 is arranged on the near-eye side of the optical lens 141.

In some implementations, the frame module 20 further includes a front coating film 15 arranged on the far-eye side of the optical waveguide assembly 11 and the first protective assembly 12. The front coating film 15 includes at least an anti-blue-light coating film.

It should be noted that the approach of providing the front coating film 15 including the anti-blue-light coating film on the far-eye side of the optical waveguide assembly 11 and the first protective assembly 12 can effectively eliminate interference images such as double images, ghosting and rainbow stripes entering the human eyes.

Therefore, the following solution is adopted: the front coating film 15 including the anti-blue-light coating film is arranged on the far-eye side of the optical waveguide assembly 11 and the first protective assembly 12, which can effectively eliminate interference images such as double images, ghosting and rainbow stripes entering the human eyes.

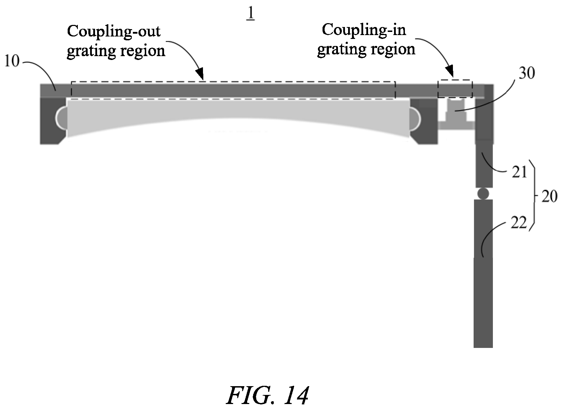

Referring to Fig. 14, Fig. 14 is a schematic structural diagram of AR glasses 1 according to an embodiment of the present application.

As shown in Fig. 14, an embodiment of the present application further provides AR glasses 1, including: a lens module 10, a frame module 20, and an optical engine module 30. The components of the AR glasses 1 are described in detail below.

Specifically, the lens module 10 is a lens module 10 according to any of the embodiments of the present application, and the lens module 10 has a near-eye side and a far-eye side opposite each other; the frame module 20 includes a frame assembly 21 and a temple assembly 22, where the lens module 10 is mounted on the frame assembly 21, and the temple assembly 22 is connected to the frame assembly 21 and extends toward the near-eye side of the lens module 10; and the optical engine module 30 is connected to at least one of the frame assembly 21 or the temple assembly 22, and is arranged corresponding to the lens module 10.

In some implementations, the AR glasses 1 further include a near-eye lens module 40. The near-eye lens module 40 is arranged on the near-eye side of the lens module 10 and spaced apart from the lens module 10.

The near-eye lens assembly 14 is one of a refractive lens and a plano lens.

In some implementations, the first grating structure 1115 includes a coupling-in grating and a coupling-out grating.

The optical engine module 30 is arranged corresponding to the coupling-in grating of the lens module 10 and configured to output an optical signal to the coupling-in grating, and the lens module 10 is configured to transmit the optical signal entering the coupling-in grating to the coupling-out grating for output.

As shown in Fig. 9, in some implementations, a third target area 1113 and a fourth target area 1114 are formed on a surface of a side of the optical waveguide lens 111 that faces away from the first grating structure 1115, a second grating structure 1116 is provided in the third target area 1113 of the optical waveguide lens 111, and the optical waveguide assembly 11 further includes a second anti-reflection component 113. The second anti-reflection component 113 is arranged, corresponding to the fourth target area 1114, on the side of the optical waveguide lens 111 where the second grating structure 1116 is formed.

Here, one of the first grating structure 1115 and the second grating structure 1116 includes a coupling-in grating, and the other one includes a coupling-out grating; the optical engine module 30 is arranged corresponding to the coupling-in grating of the lens module 10 and configured to output an optical signal to the coupling-in grating; and the lens module 10 is configured to transmit the optical signal entering the coupling-in grating to the coupling-out grating for output.

For example, in the AR glasses 1 as shown in Fig. 14, the lens module has a coupling-in grating region and a coupling-out grating region, and on the optical waveguide lens 111, a coupling-in grating is formed on either side of the coupling-in grating region, and a coupling-out grating is formed on either side of the coupling-out grating region.

With reference to the lens module 10 in the embodiments of the present application, it should be understood that when the coupling-in grating is arranged on the far-eye side of the optical waveguide lens 111, the coupling-in grating is a reflective grating, whereas when the coupling-in grating is arranged on the near-eye side of the optical waveguide lens 111, the coupling-in grating is a transmissive grating. The same applies to the coupling-out grating.

In summary, the embodiments of the present application provide various lens modules 10 and AR glasses 1. A lens module 10 includes: an optical waveguide assembly 11, including at least an optical waveguide lens 111 and a first anti-reflection component 112, a first target area 1111 and a second target area 1112 being formed on a surface of a side of the optical waveguide lens 111, a first grating structure 1115 being provided in the first target area 1111 of the optical waveguide lens 111, and the first anti-reflection component 112 being arranged corresponding to the second target area 1112, where a first abutting surface 1121 is formed on a side of the first anti-reflection component 112 that is opposite the first grating structure 1115, and a first target included angle θ1 is formed between the first abutting surface 1121 and the optical waveguide lens 111, the first target included angle θ1 being greater than 16 degrees. According to the lens module 10 and the AR glasses 1 provided in the embodiments of the present application, by limiting the angle of inclination of the side of the first anti-reflection component 112 that is opposite the first grating structure 1115, while ensuring that the grating structures function normally and the overall light transmittance of the lens module 10 is not affected, the diffraction produced by external light passing through the lens module 10 is reduced, thereby improving the clarity and user experience when a user views the real world with the AR glasses 1.

Those of ordinary skill in the art can understand that all or some of the steps in the method and the functional modules/units in the system and apparatus disclosed above may be implemented as software, firmware, hardware, and appropriate combinations thereof. In a hardware embodiment, the division of the functional modules/units mentioned in the above description does not necessarily correspond to the division of physical components. For example, one physical component may have multiple functions, or one function or step may be jointly performed by several physical components. Some or all of the physical components may be implemented as software executed by a processor such as a central processing unit, a digital signal processor, or a microprocessor, or may be implemented as hardware or a setting circuit such as an application-specific integrated circuit. Such software may be distributed on a computer-readable medium, which may include a computer storage medium (or non-transitory medium) and a communication medium (or a transitory medium).

It should be understood that terms used in this specification of the present application are only for the purpose of describing specific embodiments, and are not intended to limit the present application. Unless otherwise explicitly specified and defined, the terms such as "mounting", "connecting" and "connection" should be interpreted in a broad sense, for example, they may be a fixed connection, a detachable connection, or an integral connection; or may be a mechanical connection or an electrical connection; or may be a direct connection, an indirect connection by means of an intermediate medium, or internal communication between two elements. For those of ordinary skill in the art, the specific meaning of the terms mentioned above in the present application can be construed according to specific circumstances. As used in this specification and the appended claims of the present application, the singular forms "a", "an", and "the" are intended to include plural forms, unless otherwise explicitly specified in the context.

It should be further understood that the term "and/or" used in the specification and the appended claims of the present application indicates any combination and all possible combinations of one or more items listed in association, and includes the combinations. It should be noted that the term "comprise", "include", or any other variant thereof herein is intended to encompass a non-exclusive inclusion, such that a process, method, article, or system that includes a series of elements not only includes those elements, but also includes other elements not explicitly listed, or elements that are inherent to such a process, method, article, or system.

## Claims

1. A lens module for AR glasses, **characterized by** comprising at least:
an optical waveguide assembly, comprising at least an optical waveguide lens and a first anti-reflection component, a first target area and a second target area being formed on a surface of a side of the optical waveguide lens, a first grating structure being provided in the first target area of the optical waveguide lens, and the first anti-reflection component being arranged corresponding to the second target area,
wherein a first abutting surface is formed on a side of the first anti-reflection component that is opposite the first grating structure, and a first target included angle greater than 16 degrees is formed between the first abutting surface and the optical waveguide lens.

2. A lens module for AR glasses, **characterized by** comprising at least:
an optical waveguide assembly, comprising at least an optical waveguide lens and a first anti-reflection component, a first target area and a second target area being formed on a surface of a side of the optical waveguide lens, a first grating structure being provided in the first target area of the optical waveguide lens, and the first anti-reflection component being arranged corresponding to the second target area,
wherein the first anti-reflection component comprises a plurality of anti-reflection film units stacked in a thickness direction of the optical waveguide lens, wherein a sub-abutting surface is formed on a side of each of the plurality of anti-reflection film units that is close to the first grating structure, the sub-abutting surfaces form a second abutting surface, and a second target included angle greater than 16 degrees is formed between the second abutting surface and the optical waveguide lens.

3. A lens module for AR glasses, **characterized by** comprising at least:
an optical waveguide assembly, comprising at least an optical waveguide lens and a first anti-reflection component, a first target area and a second target area being formed on a surface of a side of the optical waveguide lens, a first grating structure being provided in the first target area of the optical waveguide lens, and the first anti-reflection component being arranged corresponding to the second target area,
wherein the first anti-reflection component comprises a plurality of anti-reflection film units stacked in a thickness direction of the optical waveguide lens, the plurality of anti-reflection film units comprising at least one first-type film and at least one second-type film, wherein the at least one first-type film and the at least one second-type film are alternately arranged in the thickness direction of the optical waveguide lens, the first-type film has a refractive index less than 2.5, the second-type film has a refractive index less than 1.45, and the refractive index of the first-type film is greater than the refractive index of the second-type film; and
wherein the first-type film has a thickness equal to λ/4*n1, and the second-type film has a thickness equal to λ/4*n2, where λ is a specific wavelength corresponding to the anti-reflection film unit, n1 is the refractive index of the first-type film, and n2 is the refractive index of the second-type film.

4. The lens module according to any one of claims 1 to 3, **characterized in that** a third target area and a fourth target area are formed on a surface of a side of the optical waveguide lens that faces away from the first grating structure, a second grating structure is provided in the third target area of the optical waveguide lens, and the optical waveguide assembly further comprises a second anti-reflection component, the second anti-reflection component being arranged, corresponding to the fourth target area, on the side of the optical waveguide lens where the second grating structure is formed.

5. The lens module according to any one of claims 1 to 3, **characterized in that** the lens module further comprises a first protective assembly, the first protective assembly being arranged on the side of the optical waveguide lens where the first grating structure is formed, and the first anti-reflection component being arranged between the first protective assembly and the optical waveguide lens; and/or
the lens module further comprises a second protective assembly, the second protective assembly being arranged on a side of the optical waveguide lens that is away from the first protective assembly.

6. The lens module according to claim 5, **characterized in that** the first protective assembly comprises at least a first cover plate, the first cover plate being arranged on the side of the optical waveguide lens where the first grating structure is formed, and being spaced apart from the optical waveguide assembly.

7. The lens module according to claim 5, **characterized in that** the first protective assembly further comprises a third anti-reflection component, the third anti-reflection component being arranged on at least one side of the first cover plate in its thickness direction.

8. The lens module according to claim 5, **characterized in that** the first protective assembly comprises a composite layer covering the side of the optical waveguide lens where the first grating structure is formed, the composite layer being adapted to a surface of the first grating structure,
wherein the composite layer comprises at least a protective coating and an anti-reflection coating.

9. The lens module according to claim 5, **characterized in that** the second protective assembly comprises at least a second cover plate, the second cover plate being arranged on the side of the optical waveguide lens that is away from the first protective assembly, and being spaced apart from the optical waveguide assembly.

10. The lens module according to claim 9, **characterized in that** the second protective assembly further comprises a fourth anti-reflection component, the fourth anti-reflection component being arranged on at least one side of the second cover plate in its thickness direction.

11. The lens module according to claim 5, **characterized in that** a distance between the first protective assembly and the first anti-reflection component is from 0.01 mm to 10 mm;
and/or a distance between the second protective assembly and the optical waveguide assembly 11 is from 0.01 mm to 10 mm.

12. The lens module according to any one of claims 1 to 3, **characterized in that** the optical waveguide lens comprises an optical waveguide substrate and an imprint adhesive layer, wherein the imprint adhesive layer is arranged on at least one side of the optical waveguide substrate in its thickness direction, and the imprint adhesive layer forms the first grating structure.

13. The lens module according to any one of claims 1 to 3, **characterized in that** the lens module has a near-eye side and a far-eye side opposite each other, and the lens module further comprises a near-eye lens assembly, the near-eye lens assembly being arranged on the near-eye side of the optical waveguide lens,
wherein the near-eye lens assembly is one of a refractive lens and a plano lens.

14. The lens module according to claim 13, **characterized in that** the near-eye lens assembly comprises an optical lens and a rear coating film, the optical lens being arranged on the near-eye side of the optical waveguide lens and spaced apart from the optical waveguide assembly, and the rear coating film being arranged on the near-eye side of the optical lens.

15. The lens module according to claim 14, **characterized in that** the frame module further comprises a front coating film arranged on the far-eye side of the optical waveguide assembly and the first protective assembly, wherein the front coating film comprises at least an anti-blue-light coating film.

16. The lens module according to any one of claims 1 to 3, **characterized in that** the optical waveguide lens has a first surface corresponding to a far-eye side and a second surface corresponding to a near-eye side, and the first grating structure comprises a coupling-in grating and a coupling-out grating,
wherein in response to the coupling-in grating being arranged on the first surface, the coupling-in grating is a reflective grating, and in response to the coupling-in grating being arranged on the second surface, the coupling-in grating is a transmissive grating; and
in response to the coupling-out grating being arranged on the first surface, the coupling-out grating is a reflective grating, and in response to the coupling-out grating being arranged on the second surface, the coupling-out grating is a transmissive grating.

17. AR glasses, **characterized by** comprising:
a lens module according to any one of claims 1 to 16, the lens module having a near-eye side and a far-eye side opposite each other;
a frame module, comprising a frame assembly and a temple assembly, wherein the lens module is mounted on the frame assembly, and the temple assembly is connected to the frame assembly and extends toward the near-eye side of the lens module; and
an optical engine module connected to at least one of the frame assembly or the temple assembly and arranged corresponding to the lens module.

18. The AR glasses according to claim 17, **characterized in that** the AR glasses further comprise a near-eye lens module, the near-eye lens module being arranged on the near-eye side of the lens module and spaced apart from the lens module,
wherein the near-eye lens assembly is one of a refractive lens and a plano lens.

19. The AR glasses according to claim 18, **characterized in that** the first grating structure comprises a coupling-in grating and a coupling-out grating,
wherein the optical engine module is arranged corresponding to the coupling-in grating of the lens module and configured to output an optical signal to the coupling-in grating, and the lens module is configured to transmit the optical signal entering the coupling-in grating to the coupling-out grating for output.

20. The AR glasses according to claim 17, **characterized in that** a third target area and a fourth target area are formed on a surface of a side of the optical waveguide lens that faces away from the first grating structure, a second grating structure is provided in the third target area of the optical waveguide lens, and the optical waveguide assembly further comprises a second anti-reflection component, the second anti-reflection component being arranged, corresponding to the fourth target area, on the side of the optical waveguide lens where the second grating structure is formed,
wherein one of the first grating structure and the second grating structure comprises a coupling-in grating, and the other one comprises a coupling-out grating; the optical engine module is arranged corresponding to the coupling-in grating of the lens module and configured to output an optical signal to the coupling-in grating; and the lens module is configured to transmit the optical signal entering the coupling-in grating to the coupling-out grating for output.
